# EUROPEAN PATENT SPECIFICATION

(11) **EP 2 992 776 B1**
(45) Date of publication and mention of the grant of the patent: **06.11.2019**
(21) Application number: 15182620.3
(22) Date of filing: 27.08.2015
(51) Int. Cl.: A45C 11/00, H01M 2/10, H02J 7/02, H04B 5/00, H05K 5/00, H01Q 1/24

(54) **CASE AND APPARATUS INCLUDING THE SAME**
GEHÄUSE UND VORRICHTUNG DAMIT
BOÎTIER ET APPAREIL LE COMPRENANT

(30) Priority: 04.09.2014 KR 20140117835; 23.04.2015 KR 20150056927
(43) Date of publication of application: 09.03.2016
(73) Proprietor: WITS Co., Ltd., Cheoin-gu, Yongin-si, Gyeonggi-do (KR)
(72) Inventor: CHANG, Ki Won, Gyeonggi-Do (KR); KIM, Ji Hoon, Gyeonggi-Do (KR); SUNG, Jae Suk, Gyeonggi-Do (KR); KIM, Choon Hee, Gyeonggi-Do (KR); LIM, Hyun Keun, Gyeonggi-Do (KR); NAM, Isaac, Gyeonggi-Do (KR)
(74) Representative: RGTH

(56) References cited:
- WO-A1-2013/102901
- TW-U- M 475 107
- US-A1- 2012 329 535
- US-A1- 2014 077 669
- US-A1- 2014 159 502
- US-A1- 2015 077 047

## Description

### BACKGROUND

### 1. Field

This application relates to a case including a coil for receiving power wirelessly or performing near-field communication, and an apparatus including the same.

### 2. Description of Related Art

In accordance with the development of wireless technology, various wireless functions ranging from the transmission of data to the transmission of power have been implemented. In accordance with the trend for mobile devices such as cellular phones, tablets, and other mobile devices to be protected from water and dust, wireless power reception technology is increasingly being demanded in mobile devices. In addition, in order to perform a function such as electronic payment approval or other function requiring data communication using a mobile device, near-field communication functionality is also being demanded in mobile devices.

US 2014/0159502 A1 discloses wirelessly transmitting power to a smartphone. A coil for wirelessly receiving power is encapsulated in a jacket-shaped cover part for covering the rear and lateral sides of the smartphone. The cover part is made of a non-magnetic material in order to suppress turbulence or loss of magnetic flux. Further, the cover part is made of an electrically non-conductive material in order to suppress loss of electric power due to eddy current generation during power transmission. For example, the cover part may be made by insert-molding thermoplastic polycarbonate resin.

US 2012/0329535 A1 discloses a metallic jacket for covering an outside of a mobile phone.

Mobile devices such as cellular phones, tablets, and other mobile devices have increasingly been provided with metal cases due to a customer demand. However, when a rear surface of the mobile device is formed by a metal case, even in the case that a coil for wirelessly receiving power or performing near-field communication is disposed in the metal case, the power may not be wirelessly received or data may not be transmitted and received due to the metal case.

TW M 475 107 U discloses a rear case for a wirelessly charging electronic device. The rear case includes a metal housing having a rectangular opening. An induction coil for wirelessly receiving power is embedded in an insulation fixing structure made of plastic or rubber. The insulation fixing structure with the coil embedded therein is clamped in the opening of the metal rear case.

### SUMMARY

It is an object of the invention to provide an improved case for an electronic device which allows wirelessly receiving power or performing wireless communication, and an apparatus including such a case.

The invention is set out in the independent claims whereas preferred embodiments are outlined in the dependent claims.

### BRIEF DESCRIPTION OF THE DRAWINGS

FIG. 1 is a view illustrating an example of an exterior configuration of an apparatus.
FIG. 2 is a view illustrating another example of an exterior configuration of an apparatus.
FIG. 3 is a view illustrating an example of an internal circuit of the apparatus.
FIGS. 4 through 7 are views illustrating examples of configurations in which the apparatus receives power wirelessly from a wireless power transmitter.

Throughout the drawings and the detailed description, the same reference numerals refer to the same elements. The drawings may not be to scale, and the relative size, proportions, and depiction of elements in the drawings may be exaggerated for clarity,
comprehensive understanding of the methods, apparatuses, and/or systems described herein. However, various changes, modifications, and equivalents of the methods, apparatuses, and/or systems described herein will be apparent to one of ordinary skill in the art. The sequences of operations described herein are merely examples, and are not limited to those set forth herein, but may be changed as will be apparent to one of ordinary skill in the art, with the exception of operations necessarily occurring in a certain order. Also, descriptions of functions and constructions that are well known to one of ordinary skill in the art may be omitted for increased clarity and conciseness.

The features described herein may be embodied in different forms, and are not to be construed as being limited to the examples described herein. Rather, the examples described herein have been provided so that this disclosure will be thorough and complete, and will convey the full scope of the disclosure to one of ordinary skill in the art.

The invention is defined by the appended claims. In the following, embodiments not falling within the scope of the claims should be understood as examples useful to understand the invention.

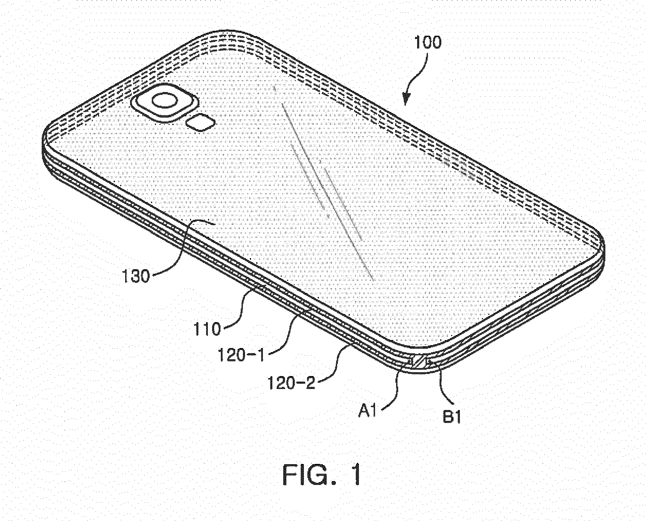

FIG. 1 is a view illustrating an example of an exterior configuration of an apparatus 100, and illustrates a perspective view of a rear surface of the apparatus 100 in a case in which the apparatus 100 is a mobile device such as a smartphone. In FIG. 1, reference numeral 110 denotes a receiving coil formed on a side surface of the apparatus 100, reference numerals 120-1 and 120-2 denote insulating portions, and reference numeral 130 denotes a rear surface of the apparatus. A portion of the case of the apparatus 100 is formed by the receiving coil 110, the insulating portions 120-1 and 120-2, and the rear surface 130. The rear surface 130 is a casing region that surrounds at least a portion of the apparatus 100.

In a case in which the rear surface 130 of the apparatus 100 is made of metal, the receiving coil 110 is formed along an edge of the apparatus 100, thereby allowing the apparatus 100 to receive power wirelessly. In the example in FIG. 1, the receiving coil 110 is a single conductive wire formed along the edge of the apparatus 100. Although FIG. 1 illustrates a case in which the receiving coil 110 is a single conductive wire formed across almost the entire edge of the apparatus 100, the receiving coil 110 may also be formed across the entire edge and may also be formed only in a portion of the edge. In addition, the receiving coil 110 may be formed to have a large number of turns along the edge of the apparatus 100. The receiving coil 110 may have a ring shape or a polygonal shape having ends that are separated from each other.

The insulating portion 120-1 is disposed between the receiving coil 110 and the rear surface 130 of the apparatus 100. Thus, the receiving coil 110 and the rear surface 130 of the apparatus 100 made of metal are electrically insulated from each other.

The insulating portion 120-2 is also disposed between the receiving coil 110 and a front surface of the apparatus 100. However, in a case in which a material of the front surface of the apparatus 100 is not made of metal, the insulating portion 120-2 may be omitted.

Alternatively, the edge of the apparatus 100 may include the insulating portions 120-1 and 120-2 and the receiving coil 110. In this case, other portions of the edge of the apparatus 100, that is, a portion thereof between the insulating portion 120-1 and the rear surface 130 of the apparatus 100 and a portion thereof between the insulating portion 120-2 and the front surface of the apparatus 100 may be made of metal.

Ends A1 and B1 of the receiving coil 110 are connected to an internal circuit of the apparatus.

Although FIG. 1 illustrates a case in which the receiving coil 110 is formed separately on the edge of the apparatus 100, the edge of the apparatus 100 may be formed of metal and may also be used as a receiving coil for receiving power wirelessly. In detail, the receiving coil 110 may be formed using a method of forming the edge of the apparatus 100 using metal and then forming the insulating portions 120-1 and 120-2.

The case of the apparatus 100 including the receiving coil 110, the insulating portions 120-1 and 120-2, and the rear surface 130 of the apparatus 100 may be integrally formed by a method such as insert injection molding, or any other suitable method. In this case, the ends A1 and 81 of the receiving coil 110 may be provided with a terminal or a lead wire that is electrically connected to the internal circuit of the apparatus 100.

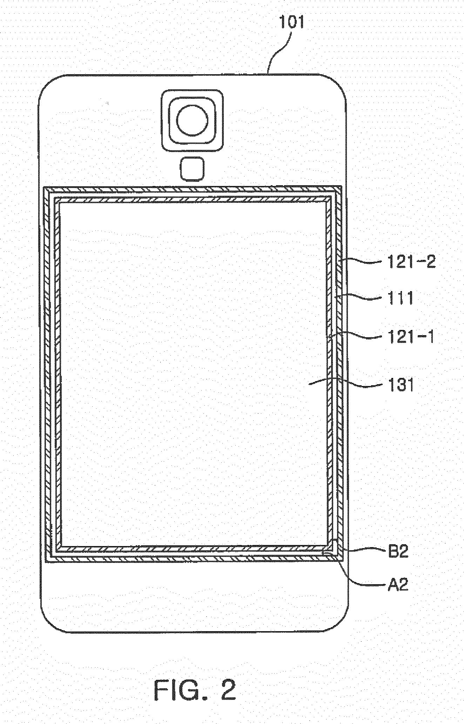

FIG. 2 is a view illustrating another example of an exterior configuration of an apparatus 101, and illustrates a rear surface of the apparatus 101 in a case in which the apparatus 101 is a mobile device such as a smartphone. In FIG. 2, reference numeral 111 denotes a receiving coil formed on a rear surface of the apparatus 101, reference numerals 121-1 and 121-2 denote insulating portions, and reference numeral 131 denotes the rear surface of the apparatus 101. A portion of the case of the apparatus 101 is formed by the receiving coil 111, the insulating portions 121-1 and 121-2, and the rear surface 131. The rear surface 131 is a casing region that surrounds at least a portion of the apparatus 101.

In the case of the apparatus 101, when the rear surface 131 of the apparatus 101 is made of metal, the receiving coil 111 is formed along an edge of the rear surface 131 of the apparatus 101, thereby allowing the apparatus 101 to receive power wirelessly. In the example in FIG. 2, the receiving coil 111 is a single conductive wire formed along the edge of the rear surface 131 of the apparatus 101. Although FIG. 2 illustrates a case in which the receiving coil 111 is a single conductive wire formed across almost the entire edge of the rear surface 131 of the apparatus 101, the receiving coil 110 may also be formed across the entire edge and may also only be formed in a portion of the edge. In addition, the receiving coil 111 may be formed to have a large number of turns along the edge of the rear surface 131 of the apparatus 101. The receiving coil 111 may have a ring shape or a polygonal shape having ends that are separated from each other.

The insulating portions 121-1 and 121-2 are disposed between the receiving coil 111 and the rear surface 131 of the apparatus 101. As a result, the receiving coil 111 and the rear surface 131 of the apparatus 101 made of metal are electrically insulated from each other.

In a case in which portions of the apparatus 101 except for the rear surface 131 formed inwardly of the receiving coil 111, and in a case in which sides of the apparatus are formed of a non-metallic material, the insulating portion 121-2 may be omitted.

Ends A2 and B2 of the receiving coil 111 are connected to an internal circuit of the apparatus.

The case of the apparatus 101 including the receiving coil 111, the insulating portions 121-1 and 121-2, and the rear surface 131 of the apparatus 101 may be integrally formed by a method such as insert injection molding, or any other suitable method. In this case, the ends A2 and B2 of the receiving coil 111 may be provided with a terminal or a lead wire that is electrically connected to the internal circuit of the apparatus 101.

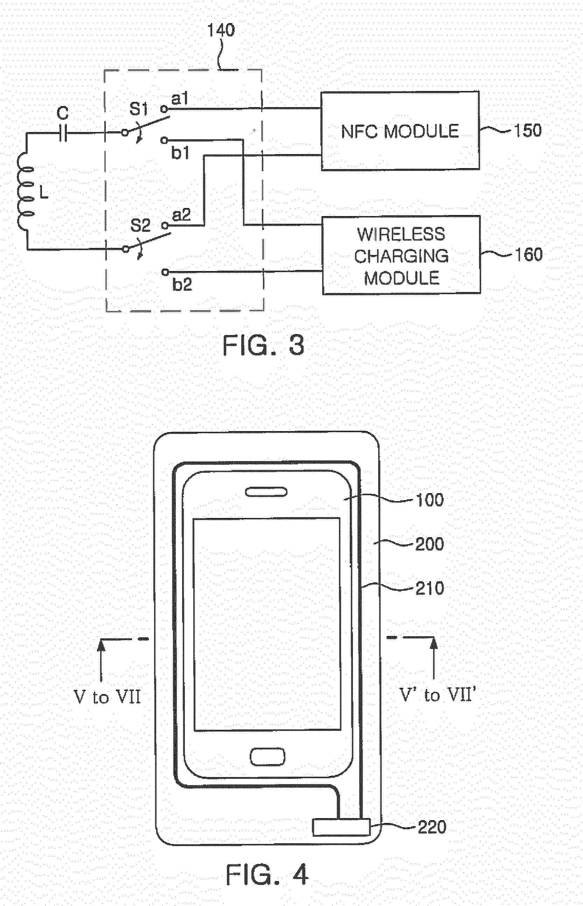

FIG. 3 is a view illustrating an example of an internal circuit of the apparatus. The body of the apparatus includes a printed circuit board (PCB) including the internal circuit, and in the example in FIG. 3, the internal circuit of the apparatus includes a capacitor C, a switch portion 140, a near-field communication (NFC) module 150, and a wireless charging module 160. In FIG. 3, reference numeral L denotes a receiving coil, for example, the receiving coil 110 of FIG. 1 or the receiving coil 111 of FIG. 2.

The receiving coil L receives power wirelessly from an external power source. The receiving coil L may also wirelessly receive a data signal in addition to the power. The receiving coil L and the capacitor C form a resonance tank.

The switch portion 140 includes switches S1 and S2, and transfers the power wirelessly received by the receiving coil L to the wireless charging module 160, or transfers the data signal received by the receiving coil L to the NFC module 150. The switches S1 and S2 of the switch portion 140 may be controlled in response to an input from a user, and may also be controlled according to an amplitude of the signal received by the receiving coil L. For example, when the amplitude of the signal received by the receiving coil L is equal to or higher than a reference amplitude, the signal received by the receiving coil L may be determined to be the power that is wirelessly received, and the switches S1 and S2 may be controlled to connect the switch S1 to a terminal b1 and connect the switch S2 to a terminal b2 to connect the receiving coil L and the capacitor C to the wireless charging module 160. Alternatively, when the amplitude of the signal received by the receiving coil L is lower than the reference amplitude, the signal received by the receiving coil L may be determined to be the data signal, and the switches S1 and S2 may be controlled to connect the switch S1 to a terminal a1 and connect the switch S2 to a terminal a2 to connect the receiving coil L and the capacitor C to the NFC module 150.

The NFC module 150 enables the apparatus to transmit and receive data to and from other external apparatuses.

The wireless charging module 160 may include a rectifier, a regulator, and other charging components, and may transfer the power that is wirelessly received to a battery (not illustrated) or other energy storage device of the apparatus.

Although FIG. 3 illustrates a case in which the switch portion 140 includes two switches S1 and S2, the switch S2 may be omitted in a case in which a terminal a2 and a terminal b2 are connected to a common ground.

FIGS. 4 through 7 are views illustrating examples of configurations in which an apparatus wirelessly receives power from a wireless power transmitter 200. In detail, FIG. 4 illustrates a plan view of an apparatus in a case in which the apparatus has the configuration of FIG. 1 or FIG. 2, FIG. 5 illustrates a cross-sectional view of an apparatus in the case in which the apparatus has the configuration of FIG. 1, and FIGS. 6 and 7 illustrate cross-sectional views of an apparatus in a case in which the apparatus has the configuration of FIG. 2. In FIGS. 4 through 7, reference numeral 210 denotes a transmitting coil of the wireless power transmitter 200, reference numeral 220 denotes a power source portion of the wireless power transmitter 200, reference numeral 230 denotes a ferrite sheet of the wireless power transmitter 200, and reference numeral 240 denotes a case of the wireless power transmitter 200.

As illustrated in FIG. 4, in order to wirelessly transmit power to the apparatus 100, the transmitting coil 210 of the wireless power transmitter 200 is formed to surround the receiving coil 110 of the apparatus 100. In detail, in order to wirelessly transmit power, the receiving coil 110 of the apparatus 100 is disposed within the transmitting coil 210 of the wireless power transmitter 200.

Although FIG. 4 illustrates a case in which the transmitting coil 210 has a single winding, the transmitting coil 210 may have a two or more windings.

Table 1 illustrates simulation results for self-inductances of the receiving coil 110 (FIGS. 1 and 4), mutual inductances between the receiving coil 110 and the transmitting coil 210 (FIG. 4), and coupling coefficients between the receiving coil 110 and the transmitting coil 210 according to distances between the ends A1 and B1 (FIG. 1) of the receiving coil 110 in the apparatus 100 having an edge length of 384 mm. The edge length is a length measured along the entire edge of the apparatus 100.

**Table 1**

| Classification | Distances Between Ends A1 and A2 of Receiving Coil | | | | |
|---|---|---|---|---|---|
| | 0 mm | 5 mm | 10 mm | 20 mm | 30 mm |
| Self-Inductance | 0.293 | 0.292 | 0.289 | 0.299 | 0.255 |
| Mutual Inductance | 0.166 | 0.166 | 0.165 | 0.168 | 0.143 |
| Coupling Coefficient | 0.473 | 0.473 | 0.474 | 0.472 | 0.440 |

It can be seen from Table 1 that the self-inductance, the mutual inductance, and the coupling coefficient barely change up to the distance between the ends A1 and B1 of the receiving coil 110 of 20 mm, which is about 5% of the edge length of 384 mm of the apparatus, as compared to a case in which the distance between the ends A1 and B1 of the receiving coil 110 is 0 mm, that is, a case in which the receiving coil entirely surrounds the edge when viewed from above. In other words, when the receiving coil is formed along 95% or more of the edge, a sufficiently high value of wireless charging efficiency may be achieved.

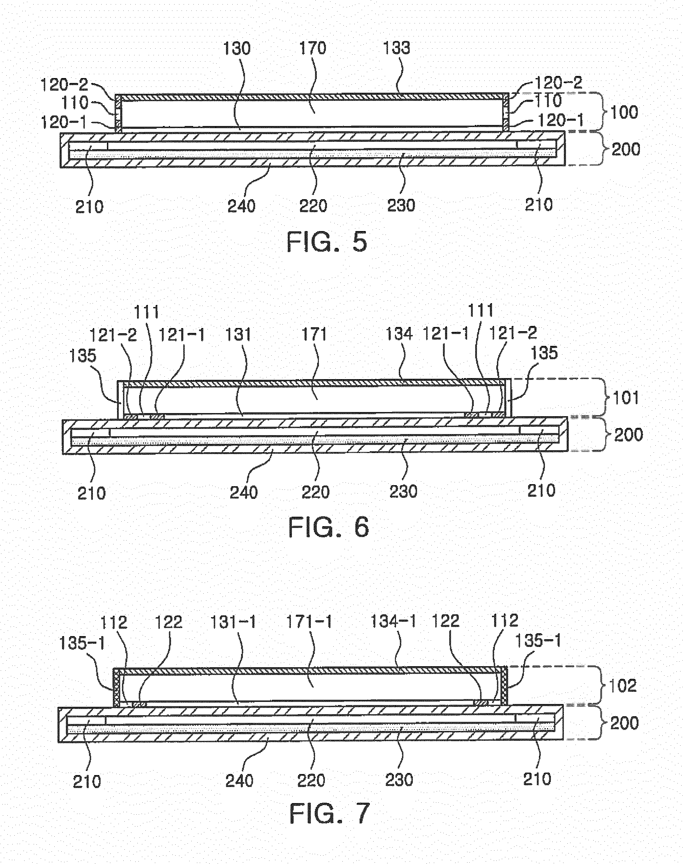

FIG. 5 illustrates an example of a configuration in which the apparatus 100 wirelessly receives power from the wireless power transmitter 200, and illustrates a cross-sectional view of a case in which the apparatus 100 having the configuration of FIG. 1 is disposed on the wireless power transmitter 200 to wirelessly receive power. The apparatus 100 includes the rear surface 130, the insulating portions 120-1 and 120-2, the receiving coil 110, a front surface 133, and a body 170.

When viewed from above, the receiving coil 110 of the apparatus 100 is disposed outside the rear surface 130 of the apparatus 100 made of metal. The insulating portion 120-1 is disposed between the receiving coil 110 and the rear surface 130 of the apparatus 100. In addition, the insulating portion 120-2 is disposed between the receiving coil 110 and the front surface 133 of the apparatus 100. However, in a case in which the front surface 133 of the apparatus 100 is not made of metal, there is no need to insulate the front surface 133 of the apparatus 100 and the receiving coil 110 from each other, so the insulating portion 120-2 may be omitted.

The front surface 133 of the apparatus 100, which is provided to protect a display device, is made of a transparent material. The front surface 133 of the apparatus 100 may also be extended to portions of the side surface of the apparatus 100.

The capacitor C, the switch portion 140, the NFC module 150, and the wireless charging module 160 illustrated in FIG. 3 are disposed in the body 170 of the apparatus 100.

The transmitting coil 210 of the wireless power transmitter 200 is disposed outside the receiving coil 110 of the apparatus 100.

FIGS. 6 and 7 illustrate examples of a configuration in which the apparatus wirelessly receives power from the wireless power transmitter, and illustrate cross-sectional views of the apparatus in a case in which the apparatus having the configuration of FIG. 2 is disposed on the wireless power transmitter to wirelessly receive power. Referring to FIG. 6, an apparatus 101 includes include a rear surface 131, a receiving coil 111, insulating portions 121-1 and 121-2, an edge 135, a front surface 134, and a body 171. Referring to FIG. 7, an apparatus 102 includes a rear surface 131-1, a receiving coil 112, an insulating portion 122, an edge 135-1, a front surface 134-1, and a body 171-1.

The receiving coil 111 or 112 is disposed outside the rear surface 131 or 131-1 of the apparatus 101 or 102. The insulating portion 121-1 or 122 is disposed between the receiving coil 111 or 112 and the rear surface 131 or 131-1 of the apparatus 101 or 102.

As illustrated in FIG. 6, for example, when the edge 135 of the apparatus 101 is made of metal, the insulating portion 121-2 is disposed between the edge 135 of the apparatus 101 and the receiving coil 111. As illustrated in FIG. 7, in a case in which the edge 135-1 of the apparatus 102 is made of a non-metallic material, the insulating portion 121-2 in FIG. 6 not disposed between the edge 135-1 of the apparatus 102 and the receiving coil 112.

The front surface 134 or 134-1 of the apparatus 101 or 102, which is to protect a display device, is made of a transparent material. The front surface 134 or 134-1 of the apparatus 101 or 102 may also be extended to portions of the side surface of the apparatus 101 or 102.

The capacitor C, the switch portion 140, the NFC module 150, and the wireless charging module 160 illustrated in FIG. 3 are disposed in the body 171 or 171-1 of the apparatus 101 or 102.

The transmitting coil 210 of the wireless power transmitter 200 is disposed outside the receiving coil 111 or 112 of the apparatus 101 or 102.

In the examples described above, even in the case that the rear surface of the apparatus that is in contact with the wireless power transmitter is made of metal, the apparatus is able to wirelessly receive power transmitted by the transmitting coil of the wireless power transmitter.

In the examples described above, the apparatus is able to wirelessly receive power or transmit and receive data without affecting a design of the apparatus even in a case in which the metal case is used.

While this disclosure includes specific examples, it will be apparent to one of ordinary skill in the art that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims and all variations within the scope of the claims are to be construed as being included in the disclosure.

## Claims

1. A case comprising:
a casing region (130, 131, 131-1) made of metal and configured to cover at least a portion of an apparatus;
a coil (110, 111, 112) electrically insulated from the casing region and having a ring shape or a polygonal shape having ends separated from each other, the coil being configured to be disposed outside the apparatus; and
an insulating portion (120-1, 120-2, 121-1, 121-2, 122) disposed between the casing region (130, 131, 131-1) and the coil (110, 111, 112),
**characterized in that**
the coil (110, 111, 112) is constituted by a single conductive wire formed across almost the entire edge of the apparatus.

2. The case of claim 1, wherein the casing region (130, 131, 131-1) comprises a region corresponding to a rear surface of the apparatus.

3. The case of claim 2, wherein the coil (110, 111, 112) is disposed in a position corresponding to an edge of the rear surface of the apparatus.

4. The case of claim 1, wherein the coil (110, 111, 112) comprises two or more turns.

5. An apparatus comprising:
a body (170, 171, 171-1); and
a case comprising:
a casing region (130, 131, 131-1) made of metal and covering at least a portion of the body;
a coil (110, 111, 112) electrically insulated from the casing region and having a ring shape or a polygonal shape having ends separated from each other, the coil being disposed outside the body; and
an insulating portion (120-1, 120-2, 121-1, 121-2, 122) disposed between the casing region (130, 131, 131-1) and the coil (110, 111, 112),
**characterized in that**
the coil (110, 111, 112) is constituted by a single conductive wire formed across almost the entire edge of the apparatus.

6. The apparatus of claim 5, wherein the body (170, 171, 171-1) comprises a wireless charging module (160) configured to rectify power wirelessly received through the coil to charge a battery with power.

7. The apparatus of claim 5, wherein the body (170, 171, 171-1) comprises a near-field communication, NFC, module (150) configured to transmit and receive data through the coil.

8. The apparatus of claim 5, wherein the body (170, 171, 171-1) comprises:
a wireless charging module (160) configured to rectify power wirelessly received through the coil to charge a battery with power;
a near-field communication, NFC, module (150) configured to transmit and receive data through the coil; and
a switch portion (140) configured to selectively connect the coil to the NFC module or the wireless charging module in response to a signal received by the coil.

9. The apparatus of claim 5, wherein the coil (110, 111, 112) is disposed along an edge of a rear surface of the body.

10. The apparatus of claim 5, wherein:
the casing region (130, 131, 131-1) comprises a region corresponding to a rear surface of the apparatus; and
the coil constitutes a portion of the case.

## Patentansprüche

1. Gehäuse, umfassend:
einen Gehäusebereich (130, 131, 131-1) aus Metall, der so konfiguriert ist, dass er mindestens einen Teil einer Vorrichtung abdeckt;
eine Spule (110, 111, 112), die gegenüber dem Gehäusebereich elektrisch isoliert ist und eine Ringform oder eine polygonale Form mit voneinander getrennten Enden aufweist, wobei die Spule so konfiguriert ist, dass sie außerhalb der Vorrichtung angeordnet ist; und
einen Isolierbereich (120-1, 120-2, 121-1, 121-2, 122), der zwischen dem Gehäusebereich (130, 131, 131-1) und der Spule (110, 111, 112) angeordnet ist,
**dadurch gekennzeichnet, dass**
die Spule (110, 111, 112) aus einem einzelnen leitenden Draht besteht, der beinahe über die gesamte Kante der Vorrichtung ausgebildet ist.

2. Gehäuse gemäß Anspruch 1, wobei der Gehäusebereich (130, 131, 131-1) einen Bereich umfasst, der einer hinteren Oberfläche der Vorrichtung entspricht.

3. Gehäuse gemäß Anspruch 2, wobei die Spule (110, 111, 112) an einer Position angeordnet ist, die einer Kante der hinteren Oberfläche der Vorrichtung entspricht.

4. Gehäuse gemäß Anspruch 1, wobei die Spule (110, 111, 112) zwei oder mehr Windungen umfasst.

5. Vorrichtung, umfassend:
einen Körper (170, 171, 171-1); und
ein Gehäuse umfassend:
einen Gehäusebereich (130, 131, 131-1) aus Metall, der mindestens einen Teil des Körpers bedeckt;
eine Spule (110, 111, 112), die gegenüber dem Gehäusebereich elektrisch isoliert ist und eine Ringform oder eine polygonale Form mit voneinander getrennten Enden aufweist, wobei die Spule außerhalb des Körpers angeordnet ist; und
einen Isolierbereich (120-1, 120-2, 121-1, 121-2, 122), der zwischen dem Gehäusebereich (130, 131, 131-1) und der Spule (110, 111, 112) angeordnet ist,
**dadurch gekennzeichnet, dass**
die Spule (110, 111, 112) aus einem einzelnen leitenden Draht besteht, der beinahe über die gesamte Kante der Vorrichtung ausgebildet ist.

6. Vorrichtung gemäß Anspruch 5,
wobei der Körper (170, 171, 171-1) ein drahtloses Lademodul (160) umfasst, das konfiguriert ist, um über die Spule drahtlos empfangenen Strom gleichzurichten, um eine Batterie mit Strom zu laden.

7. Vorrichtung gemäß Anspruch 5,
wobei der Körper(170, 171, 171-1) ein Nahfeldkommunikationsmodul (NFC-Modul) (150) umfasst, das zum Senden und Empfangen von Daten über die Spule konfiguriert ist.

8. Vorrichtung gemäß Anspruch 5, wobei der Körper (170, 171, 171-1) Folgendes umfasst:
ein drahtloses Lademodul (160), das konfiguriert ist, um über die Spule (110, 111, 112) drahtlos empfangenen Strom gleichzurichten, um eine Batterie mit Strom zu laden;
ein Nahfeldkommunikationsmodul (NFC-Modul) (150), das zum Senden und Empfangen von Daten über die Spule konfiguriert ist; und
einen Schalterbereich (140), der konfiguriert ist, um die Spule in Reaktion auf ein von der Spule empfangenes Signal selektiv mit dem NFC-Modul oder dem drahtlosen Lademodul zu verbinden.

9. Vorrichtung gemäß Anspruch 5,
wobei die Spule (110, 111, 112) im Wesentlichen entlang einer Kante einer hinteren Oberfläche des Körpers angeordnet ist.

10. Vorrichtung gemäß Anspruch 5, wobei
der Gehäusebereich (130, 131, 131-1) einen Bereich umfasst, der einer hinteren Oberfläche der Vorrichtung entspricht; und
die Spule einen Bereich des Gehäuses bildet.

## Revendications

1. Compartiment comprenant :
une zone de compartiment (130, 131, 131-1) composée de métal et conçue pour couvrir au moins une partie d'un appareil ;
une bobine (110, 111, 112) isolée électriquement de la zone de compartiment et ayant une forme annulaire ou une forme polygonale dotée d'extrémités séparées les unes des autres, la bobine étant conçue pour être disposée à l'extérieur de l'appareil ; et
une section d'isolation (120-1, 120-2, 121-1, 121-2, 122) disposée entre la zone de compartiment (130, 131, 131-1) et la bobine (110, 111, 112),
**caractérisé en ce que**
la bobine (110, 111, 112) est constituée d'un seul fil conducteur formé à travers pratiquement tout le bord de l'appareil.

2. Compartiment selon la revendication 1, dans lequel la zone de compartiment (130, 131, 131-1) comprend une zone correspondant à une surface arrière de l'appareil.

3. Compartiment selon la revendication 2, dans lequel la bobine (110, 111, 112) est disposée à une position correspondant à un bord de la surface arrière de l'appareil.

4. Compartiment selon la revendication 1, dans lequel la bobine (110, 111, 112) comprend deux spires ou plus.

5. Appareil comprenant :
un corps (170, 171, 171-1) ; et
un compartiment comprenant :
une zone de compartiment (130, 131, 131-1) composée de métal et couvrant au moins une partie du corps ;
une bobine (110, 111, 112) isolée électriquement de la zone de compartiment et ayant une forme annulaire ou une forme polygonale dotée d'extrémités séparées les unes des autres, la bobine étant conçue pour être disposée à l'extérieur du corps ; et
une section d'isolation (120-1, 120-2, 121-1, 121-2, 122) disposée entre la zone de compartiment (130, 131, 131-1) et la bobine (110, 111, 112),
**caractérisé en ce que**
la bobine (110, 111, 112) est constituée d'un seul fil conducteur formé à travers pratiquement tout le bord de l'appareil.

6. Appareil selon la revendication 5, dans lequel le corps (170, 171, 171-1) comprend un module de chargement sans fil (160) conçu pour rectifier le courant reçu sans fil par l'intermédiaire de la bobine pour charger une batterie avec du courant.

7. Appareil selon la revendication 5, dans lequel le corps (170, 171, 171-1) comprend un module de communication à champ proche NFC (150) conçu pour transmettre et recevoir des données par l'intermédiaire de la bobine.

8. Appareil selon la revendication 5, dans lequel le corps (170, 171, 171-1) comprend :
un module de chargement sans fil (160) conçu pour rectifier le courant reçu sans fil par l'intermédiaire de la bobine pour charger une batterie avec du courant ;
un module de communication à champ proche NFC (150) conçu pour transmettre et recevoir des données par l'intermédiaire de la bobine ; et
une section de commutation (140) conçue pour connecter sélectivement la bobine au module NFC ou au module de chargement sans fil en réaction à un signal reçu par la bobine.

9. Appareil selon la revendication 5, dans lequel la bobine (110, 111, 112) est disposée le long d'un bord d'une surface arrière du corps.

10. Appareil selon la revendication 5, dans lequel :
la zone de compartiment (130, 131, 131-1) comprend une zone correspondant à une surface arrière de l'appareil ; et
la bobine constitue une partie du compartiment.
